# EUROPÄISCHE PATENTSCHRIFT

(11) **EP 0 452 785 B1**
(45) Veröffentlichungstag und Bekanntmachung des Hinweises auf die Patenterteilung: **26.10.1994**
(21) Anmeldenummer: 91105644.8
(22) Anmeldetag: 10.04.1991
(51) Int. Cl.: B23K 26/00

(54) **Aufnahmevorrichtung für eine Düse, insbesondere eines Laserschneidkopfes**
Receptacle for a nozzle, especially a nozzle of a laser cutting head
Dispositif de réception pour une buse, spécialement une buse d'une tête de découpage à laser

(30) Priorität: 14.04.1990 DE 9004335 U
(43) Veröffentlichungstag der Anmeldung: 23.10.1991
(73) Patentinhaber: Trumpf GmbH & Co, D-71254 Ditzingen (DE)
(72) Erfinder: Klingel, Hans Ing., W-7141 Möglingen (DE)
(74) Vertreter: Schmid, Berthold, Dipl.-Ing.

(56) Entgegenhaltungen:
- DE-A- 2 829 851

## Beschreibung

Laserschneidmaschinen zum Schneiden von metallischen Werkstücken haben einen Laserschneidkopf, an dessen dem Werkstück zugewandten Ende sich eine Düse befindet. In dem Laserschneidkopf befindet sich eine Linse, die den Laserstrahl fokussiert. Um einwandfreie und gleichmäßige Schneidergebnisse zu erhalten, ist es notwendig, daß der Brennpunkt des gebündelten Laserstrahls sich in einem festen Abstand zur Werkstückoberfläche befindet. Falls das zu schneidende Werkstück nicht vollkommen eben ist, ist es notwendig, daß der Brennpunkt - und damit der gesamte Laserschneidkopf - in der Höhe nach der Oberfläche des Werkstücks nachgeführt wird. Dazu ist eine Meßeinrichtung für den Abstand zwischen der Werkstückoberfläche und dem Düsenaustritt erforderlich. Für diese Messung gibt es verschiedene Methoden. Als zweckmäßig hat sich dabei die berührungslose Erfassung des Abstandes zwischen Werkstück und Düse durch Erfassung der Kapazität herausgestellt. Um diese Änderungen ermitteln zu können, ist es notwendig, daß die elektrisch leitende, metallische Düse in eine nichtleitende Aufnahmevorrichtung eingesetzt ist. Dabei hat die elektrisch leitende Düse über eine dünne metallische Leitung Verbindung mit der Meßeinrichtung. Da die Düse ein Verschleißteil darstellt, ist es zweckmäßig, sie als getrenntes Teil zu der Aufnahmevorrichtung auszubilden. Die schnelle und sichere Verbindung zwischen Düse und Aufnahmevorrichtung erfolgt durch ein Gewinde.

Die bisher bekannten Aufnahmevorrichtungen haben ein Innengewinde zum Einschrauben des Außengewindes der Düse, eine Kontaktfläche, die als metallischer, aufgedampfter Überzug des Gewindes gebildet wird und mit einem in der Aufnahmevorrichtung liegenden Draht mit einem auf der der Düse gegenüberliegenden Seite aufgedampften, leitenden Kontaktpunkt verbunden ist. Für die Zentrierung der Düse gegenüber der Aufnahmevorrichtung und der Aufnahmevorrichtung gegenüber dem Laserschneidkopf sind an der Aufnahmevorrichtung zwei Innenkegel angebracht. Die Verdrehsicherung der Aufnahmevorrichtung gegenüber dem Laserschneidkopf erfolgt durch eine vorspringende Nase.

Als Nachteil erweist sich hierbei das relativ schwierig herzustellende Gewinde im Aufnahmekörper, der üblicherweise aus Keramik besteht. Außerdem ist die Metallaufdampfung teuer und ungenau. Auch wird hierdurch das Gewinde oft sehr schwergängig, und es besteht die Gefahr eines Abriebes des Metalls in den Gewindegängen. Dies hat wiederum zur Folge, daß u.U. die elektrische Verbindung zwischen der Düse und der Aufnahmevorrichtung verschlechtert wird.

Die Aufgabe der vorliegenden Erfindung ist es, eine einfach herzustellende Aufnahmevorrichtung zu schaffen, welche ein leichtgängiges Gewinde und eine sichere und dauerhafte Kontaktübertragung ermöglicht. Hierzu ist erfindungsgemäß in die Ausnehmung ein aus elektrisch leitendem Metall bestehender, das Innengewinde aufweisender Einsatz eingefügt, und die von der Düse abgewendete Stirnfläche der Aufnahmevorrichtung weist einen kopfförmigen Ansatz als Kontaktpunkt auf, wobei dieser über einen in einer Längsbohrung oder einem Längsschlitz der Aufnahmevorrichtung angeordneten Kontaktstift elektrisch mit dem Einsatz verbunden ist.

Vorzugsweise ist der Einsatz als Büchse mit Flansch ausgebildet, wobei der Flansch die Stirnfläche der Aufnahmevorrichtung abdeckt. Um eine feste Verbindung zwischen den Teilen zu schaffen, ist der Einsatz in die gewindefreie Ausnehmung der Aufnahmevorrichtung eingeklebt.

Da bei einem Laserschneidkopf die Zentrierung der Teile zueinander von ausschlaggebender Bedeutung für das Schneidergebnis ist, weist der Einsatz einen Zentrierungsansatz für die Ausnehmung auf. Der Einsatz seinerseits ist wiederum mit einer, insbesondere kegelförmigen Zentrierfläche für eine entsprechend ausgebildete Zentrierfläche der Düse versehen. Von gleicher Bedeutung ist die Zentrierung der Aufnahmevorrichtung gegenüber dem Laserschneidkopf, so daß auch diese beiden Teile miteinander zusammenwirkende Zentrierflächen aufweisen. Vorteilhaft ist es, wenn die Ausnehmung der Aufnahmevorrichtung die Zentrierflächen sowohl gegenüber dem Einsatz als auch dem Laserschneidkopf bildet.

Um eine Verdrehung der Aufnahmevorrichtung gegenüber dem Laserschneidkopf zu verhindern, weist dieser vorzugsweise einen Stift od.dgl. auf, welcher in eine Bohrung oder einen Schlitz der Aufnahmevorrichtung eingreift. Dadurch erhält man eine relativ einfache und stabile Verdrehsicherung.

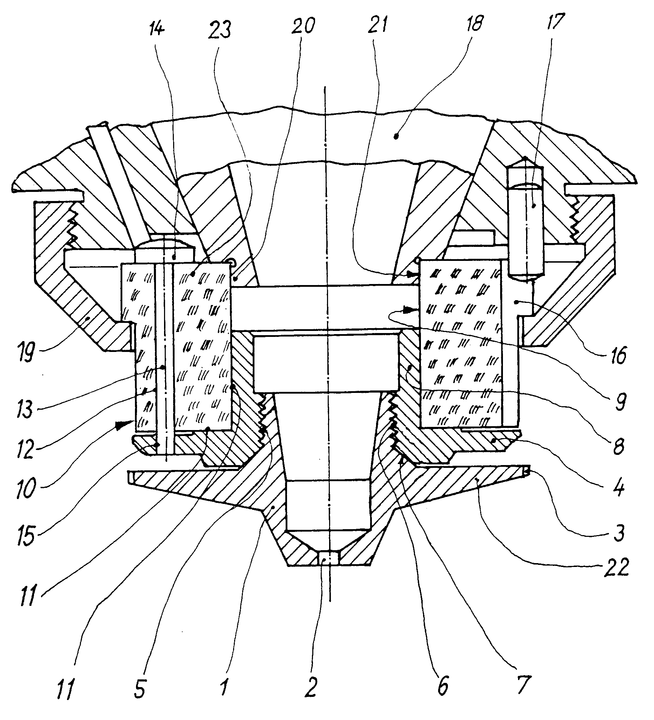

Die Zeichnung zeigt ein Ausführungsbeispiel der Erfindung, und zwar den abgebrochenen Querschnitt eines Laserschneidkopfes mit Aufnahmevorrichtung und Düse.

Am Laserschneidkopf 18 ist mittels einer Überwurfmutter 19 eine Aufnahmevorrichtung 10 für eine Düse 1 lösbar befestigt. Die Düse 1 hat eine dünne Düsenbohrung 2 und einen gerändelten Rand 3, der zum leichten Ein- und Ausschrauben der Düse 1 in den metallischen Einsatz 4 dient. Mit dem Außengewinde 5 wird die Düse 1 in das Innengewinde 6 des Einsatzes 4 eingeschraubt. Als Zentrierung zwischen Düse 1 und Einsatz 4 dienen die kegeligen Zentrierflächen 7. Der Einsatz 4 ist mit seiner Buchse 8, an welche sich ein Flansch 22 anschließt, in die Ausnehmung 9 der Aufnahmevorrichtung 10 zentrisch eingesetzt und mit dieser durch die Klebschicht 11 verbunden. In der Aufnahmevorrichtung 10 befindet sich eine Bohrung 12, in die ein Stift 13 mit kopfförmigem Ansatz 14 eingesetzt ist. Dieser Stift 13 greift in eine Bohrung 15 des Einsatzes 4 ein und ist in dieser verlötet. Die Aufnahmevorrichtung 10 hat eine schlitzförmige Aussparung 16, in die ein Stift 17 vom Laserschneidkopf 18 zur Verdrehsicherung eingreift. Am Laserschneidkopf 18 ist ein Ansatz 20 vorgesehen, welcher in die Ausnehmung 9 der Aufnahmevorrichtung 10 eingreift. Dabei sind an beiden Teilen Zentrierflächen 21 vorgesehen.

## Patentansprüche

1. Als Isolierkörper ausgebildete Aufnahmevorrichtung mit einer Ausnehmung zum Einschrauben einer aus elektrisch leitendem Material bestehenden Düse für einen Laserschneidkopf, und einer elektrisch leitenden Kontaktfläche mit Innengewinde für diese, dadurch gekennzeichnet, daß in die Ausnehmung (9) ein aus Metall bestehender, das Innengewinde (6) für die Düse (1) aufweisender Einsatz (4) eingefügt ist und daß die Aufnahmevorrichtung (10) an ihrer von der Düse (1) abgewendeten Stirnfläche einen kopfförmigen Ansatz (14) als elektrischen Kontaktpunkt aufweist, welcher mit dem Einsatz (4) über einen in einer Längsbohrung oder in einem Längsschlitz (12) der Aufnahmevorrichtung (10) angeordneten Kontaktstift (13) elektrisch verbunden ist.

2. Aufnahmevorrichtung nach Anspruch 1, dadurch gekennzeichnet, daß der Einsatz (4) als Buchse (8) mit Flansch (22) ausgebildet ist, wobei der Flansch (22) die Stirnfläche der Aufnahmevorrichtung (10) abdeckt.

3. Aufnahmevorrichtung nach einem oder beiden der vorhergehenden Ansprüche, dadurch gekennzeichnet, daß der Einsatz (4) in die gewindefreie Ausnehmung (9) eingeklebt ist.

4. Aufnahmevorrichtung nach einem oder mehreren der vorhergehenden Ansprüche, dadurch gekennzeichnet, daß der Einsatz (4) einen Zentrierungsansatz für die Ausnehmung (9) aufweist.

5. Aufnahmevorrichtung nach einem oder mehreren der vorhergehenden Ansprüche, dadurch gekennzeichnet, daß der Einsatz (4) eine insbesondere kegelförmige Zentrierfläche (7) für eine entsprechend ausgebildete Zentrierfläche (7) der Düse (1) aufweist.

6. Aufnahmevorrichtung nach einem oder mehreren der vorhergehenden Ansprüche, dadurch gekennzeichnet, daß die Aufnahmevorrichtung (10) eine Zentrierfläche (21) für eine entsprechend ausgebildete Zentrierfläche (21) des Laserschneidkopfes (18) aufweist.

7. Aufnahmevorrichtung nach einem oder mehreren der vorhergehenden Ansprüche, dadurch gekennzeichnet, daß die Aufnahmevorrichtung (10) einen Längsschlitz (16) aufweist, in welchen ein Stift (17) od.dgl. des Laserschneidkopfes (18) zur Verdrehsicherung eingreift.

8. Aufnahmevorrichtung nach einem oder mehreren der vorhergehenden Ansprüche, dadurch gekennzeichnet, daß die Ausnehmung (9) in gleicher Weise als Zentrierfläche für den Einsatz (4) wie auch für den Laserschneidkopf (18) ausgebildet ist.

## Claims

1. Holder formed as an insulating body with a recess into which a nozzle made of electrically-conductive material for a laser cutting head can be screwed, and an electrically-conductive contact surface with an internal thread for the nozzle, characterized in that a metal insert (4) comprising the internal thread (6) for the nozzle (1) is inserted in the recess (9), and in that the holder (10) comprises, as an electrical contact point on its end face which faces away from the nozzle (1), a head-shaped stud (14) which is electrically connected to the insert (4) by means of a contact pin (13) disposed in a longitudinal bore or in a longitudinal slot (12) of the holder (10).

2. Holder according to Claim 1, characterized in that the insert (4) is formed as a bush (8) with a flange (22), the flange (22) covering the end face of the holder (10).

3. Holder according to one or both of the preceding claims, characterized in that the insert (4) is glued in the recess (9) which does not have a thread.

4. Holder according to one or more of the preceding claims, characterized in that the insert (4) comprises a centring shoulder for the recess (9).

5. Holder according to one or more of the preceding claims, characterized in that the insert (4) comprises, in particular, a conical centring surface (7) for a correspondingly-formed centring surface (7) of the nozzle (1).

6. Holder according to one or more of the preceding claims, characterized in that the holder (10) comprises a centring surface (21) for a correspondingly-formed centring surface (21) of the laser cutting head (18).

7. Holder according to one or more of the preceding claims, characterized in that the holder (10) comprises a longitudinal slot (16) in which a pin (17) or the like of the laser cutting head (18) engages for torsional security.

8. Holder according to one or more of the preceding claims, characterized in that the recess (9) is formed as a centring surface both for the insert (4) and for the laser cutting head (18).

## Revendications

1. Dispositif récepteur, constitué par un corps isolant, muni d'un évidement pour le vissage d'une buse faite d'une matière conductrice de l'électricité, appartenant à une tête de coupe au laser, et une surface de contact électroconductrice munie d'un filetage intérieur pour recevoir cette buse, caractérisé en ce que, dans l'évidement (9), est emboîté un élément rapporté (4) fait de métal, qui présente le filetage intérieur (6) destiné à recevoir la buse (1) et en ce que le dispositif récepteur (10) présente, sur sa surface frontale qui est la plus éloignée de la buse (1), un bossage (14) en forme de tête qui sert de point de contact électrique et qui est connecté électriquement à l'élément rapporté (4) par l'intermédiaire d'une tige de contact (13) disposée dans un perçage longitudinal et dans une fente longitudinale (12) du dispositif récepteur (10).

2. Dispositif récepteur selon la revendication 1, caractérisé en ce que l'élément rapporté (4) est constitué par une douille (8) munie d'une collerette (22), la collerette (22) recouvrant la surface frontale du dispositif récepteur (10).

3. Dispositif récepteur selon une des revendications précédentes ou selon les deux revendications précédentes, caractérisé en ce que l'élément rapporté (4) est collé dans l'évidement (9) dépourvu de filetage.

4. Dispositif récepteur selon une ou plusieurs des revendications précédentes, caractérisé en ce que l'élément rapporté (4) présente un prolongement de centrage pour coopérer avec l'évidement (9).

5. Dispositif récepteur selon une ou plusieurs des revendications précédentes, caractérisé en ce que l'élément rapporté (4) présente une surface de centrage (7), notamment conique, pour coopérer avec une surface de centrage (7) de la buse (1) qui est de configuration correspondante.

6. Dispositif récepteur selon une ou plusieurs des revendications précédentes, caractérisé en ce que le dispositif récepteur (10) présente une surface de centrage (21) pour coopérer avec une surface de centrage (21), de configuration correspondante, de la tête de coupe au laser (18).

7. Dispositif récepteur selon une ou plusieurs des revendications précédentes, caractérisé en ce que le dispositif récepteur (10) présente une fente longitudinale (16) dans laquelle une cheville (17) ou organe équivalent de la tête de coupe au laser (18) s'engage pour assurer le blocage en rotation.

8. Dispositif récepteur selon une ou plusieurs des revendications précédentes, caractérisé en ce que l'évidement (9) constitue une surface de centrage pour l'élément rapporté (4) de même que pour la tête de coupe au laser (18).
